(19) Europäisches Patentamt

European Patent Office

Office européen des brevets

(11) **EP 1 631 809 B1**

(12) **EUROPÄISCHE PATENTSCHRIFT**

(45) Veröffentlichungstag und Bekanntmachung des Hinweises auf die Patenterteilung:
**29.11.2006 Patentblatt 2006/48**

(21) Anmeldenummer: **04739798.9**

(22) Anmeldetag: **11.06.2004**

(51) Int Cl.:
***G01M 11/02*** *(2006.01)*

(86) Internationale Anmeldenummer:
**PCT/EP2004/006302**

(87) Internationale Veröffentlichungsnummer:
**WO 2004/111600 (23.12.2004 Gazette 2004/52)**

(54) **VERFAHREN ZUR BESTIMMUNG DER ABBILDUNGSGÜTE EINES OPTISCHEN ABBILDUNGSSYSTEMS**

METHOD FOR DETERMINING THE IMAGE QUALITY OF AN OPTICAL IMAGING SYSTEM

PROCEDE POUR DETERMINER LA QUALITE D'IMAGE D'UN SYSTEME DE REPRESENTATION OPTIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **12.06.2003 DE 10327019**

(43) Veröffentlichungstag der Anmeldung:
**08.03.2006 Patentblatt 2006/10**

(73) Patentinhaber: **Carl Zeiss SMS GmbH
07745 Jena (DE)**

(72) Erfinder:
• **ENGEL, Thomas
73432 Aalen (DE)**
• **GROSS, Herbert
73457 Essingen (DE)**

(56) Entgegenhaltungen:
**EP-A- 1 246 014 DE-A- 10 154 125
US-A1- 2002 057 495**

**Beschreibung**

Die Erfindung bezieht sich auf ein Verfahren zur Bestimmung der Abbildungsgüte eines optischen Abbildungssystems, das im wesentlichen besteht aus Beleuchtungseinrichtung, Probenhalter mit Probe, Abbildungsoptiken und mindestens einer ortsauflösenden Detektionseinrichtung. Die Erfindung bezieht sich weiter auf die Nutzung des erfindungsgemäßen Verfahrens zur Ermittlung des Einflusses von Proben auf die Amplituden- und Phasenfrontverteilung des Beleuchtungslichts, von dem insbesondere die Amplitudenverteilung bekannt ist.

Im Zusammenhang mit der Herstellung hochwertiger Abbildungsoptiken, insbesondere zur Anwendung in der Mikroskopie, ist eine Bewertung der erzielbaren Abbildungsgüte erforderlich.

Es ist bekannt, die Abbildungsgüte von Abbildungssystemen, die sowohl aus wenigen Linsen bestehen als auch komplexe optischen Baugruppen umfassen können, zumindest semiquantitativ zu bestimmen. Dazu ist es üblich, so genannte Sterntests durchzuführen, wobei kreisförmige Objekte unterhalb der Auflösungsgrenze der spezifischen Optik als Testproben verwendet werden. Anhand des Verhaltens der Beugungsfiguren bei der Abbildung dieser Proben mit Defokuseinstellungen und den darin enthaltenen Symmetrien kann die Güte der Abbildung bis zu einem meist ungenügenden Genauigkeitsgrad qualitativ bestimmt werden.

So kann z.B. ein geschlossener erster Beugungsring am Rande des ersten Rayleighbereiches als Indiz für eine beugungsbegrenzte Optik betrachtet werden. Nachteiligerweise ist diese Bewertung lediglich als integrale Aussage zu verstehen. Und es kann auf diese Weise auch keine nähere quantitative Aussage über die Verteilung der restlichen Abbildungsfehler auf die verschiedenen Fehlertypen gewonnen werden, wie z.B. Sphäre, Koma oder Astigmatismus.

Bei einer anderweitigen Verfahrensweise wird die Passe der einzelnen optischen Baugruppen interferometrisch geprüft, um so Aussagen über die geometrischen Fehler beispielsweise eines Linsenkörpers gewinnen zu können, die dann in systembedingte Abbildungsfehler umgerechnet werden.

Hierbei werden bereits auch systematisch bedingte Einflußfaktoren erfaßt, sofern die Meßwellenlänge des Interferometers mit der Arbeitswellenlänge bzw. dem Wellenlängenspektrum des Beleuchtungslichts übereinstimmt. Bei aufwendigeren optischen Systemen werden gelegentlich auch speziell angepaßte Interferometer genutzt, um die Abbildungsgüte unter den gegebenen Randbedingungen und bei korrekter Arbeitswellenlänge, bezogen auf das gesamte Abbildungssystem, zu prüfen.

Angewendet wird dies beispielsweise bei Abbildungsobjektiven für Stepper oder Scanner, die in der Halbleitermikrolithographie eingesetzt werden sollen. Diese Verfahrensweise erfordert einen verhältnismäßig hohen technischen Aufwand, ist dadurch sehr kostenintensiv und wird deshalb in Verbindung mit der Mikroskopfertigung meist nicht genutzt.

Bekannt ist es weiterhin, die Wellenfront von optischen Abbildungssystemen mit sogenannten Hartmann- oder Shack-Hartmann-Wellenfrontsensoren oder mit Sensoren, die ein ähnliches Wirkungsprinzip haben, zu vermessen. Auch hier ist ein verhältnismäßig hoher technischer Aufwand zu betreiben, weshalb die entsprechenden Meßsysteme meist nur so ausgelegt sind, daß die Messungen lediglich für unterschiedliche Teilsysteme vorgesehen sind, die jedoch ähnliche Schnittstellen aufweisen, wie etwa Mikroobjektive für die Mikroskopie.

In diesem Zusammenhang besteht insbesondere für Mikroskophersteller immer wieder das Problem, daß kein allgemeines Prüfverfahren verfügbar ist, das es ermöglicht, für die unterschiedlichsten optischen Abbildungssysteme, die sich durch optische, geometrische und mechanische Parameter unterscheiden, die Abbildungsgüte möglichst genau zu bestimmen.

Auch besteht dieses Problem nicht nur während des Herstellungs- bzw. Justierprozesses, sondern auch im Zusammenhang mit der Überwachung der Qualität von Abbildungssystemen, die bereits beim Kunden im Einsatz sind.

Weiterhin ist in all den bisher bekannten Verfahrensweisen die Ermittlung der Abbildungsgüte für mehrere Feldpositionen des Abbildungssystems aufwendig bzw. ungenau.

Als Literaturquellen in diesen Zusammenhang seien genannt: Joseph Geary "Wavefront sensors", SPIE Press 1995 und Daniel Malacara "Optical Shop Testing", Wiley Verlag 1992.

Von diesem Stand der Technik ausgehend liegt der Erfindung die Aufgabe zugrunde, die bisher bekannten Verfahren so weiterzuentwickeln, daß mit geringem technischen Aufwand eine genauere quantitative Bestimmung der Abbildungsgüte von optischen Abbildungssystemen möglich ist, und das Ergebnis der Abbildungsgüte-Bestimmung auch zur Ermittlung des Einflusses von zunächst unbekannten Proben auf die Amplituden- und Phasenfrontverteilung des Beleuchtungslichts Phasenfrontverteilung des Beleuchtungslichts, von dem insbesondere die Amplitudenverteilung bekannt ist, genutzt werden kann.

Erfindungsgemäß sind bei einem Verfahren der eingangs genannten Art folgende Verfahrensschritte vorgesehen:

- Justierung der Baugruppen zueinander so, daß Abbildungen einer Probe auf die Detektionseinrichtung möglich sind,
- Aufnehmen mehrerer Abbildungen der Probe aus verschiedenen Einstellebenen nahe der Fokusebene, wobei jeweils die Detektionseinrichtung relativ zur Bildebene, die Probe relativ zur Objektebene oder das Objektiv relativ zur Probe verstellt wird,
- Verbesserung der Bildqualität durch Bildbearbeitung, insbesondere zur Verringerung des Rauschens, zum Ausgleich lokaler Empfindlichkeitsunterschiede der Detektionseinrichtung und zur Zentrierung der Intensitätsschwerpunkte auf jeweils einen vorgegebenen Ort in den Abbildungen,

- rechnerische Verknüpfung der ortsaufgelösten Bildinformationen, der auf das optische Abbildungssystem bezogenen Einstellwerte und Systemgrößen sowie von Informationen zur Probe mit dem Ziel der Ermittlung von Kennzahlen, die charakteristisch sind für die durch das Abbildungssystem verursachte Wellenfrontdeformation, und

- Ausgabe der Kennzahlen und Zuordnung zum Abbildungssystem zur Beschreibung der Abbildungsgüte

- wobei als Kennzahlen Zernike-Koeffizienten, die jeweils einer Einstellebene zugeordnet sind, ausgegeben werden.

Grundsätzlich besteht der Erfindungsgedanke darin, zunächst mit dem betriebsbereiten optischen Abbildungssystem, von dem Abbildungsparameter wie Wellenlänge, numerische Apertur, Sigma (als Kohärenzgrad der Beleuchtung), Abtastung, Bildgröße (in Pixeln), Vergrößerung usw. bekannt sind oder bestimmt werden können, von einer Probe, bevorzugt einer Probe mit einem Pinhole, mehrere Aufnahmen, einen so genannten Bildstapel, zu gewinnen, wobei die einzelnen Aufnahmen dieses Bildstapels aus unterschiedlichen Fokusabständen, d.h. aus unterschiedlichen Defokuseinstellungen nahe der Fokusebene stammen.

Mit anderen Worten: Die Probe wird mehrfach mit jeweils veränderter Defokussierung auf die ortsauflösende Detektionseinrichtung abgebildet, und die dabei pixelweise gewonnenen Bildinformationen werden gespeichert. Damit steht ein Stapel aus übereinanderliegenden Schichtbildern zur Verfügung, bei dem jedes Bild aus einer Vielzahl von Bildinformationen in Form von Intensitätswerten besteht.

Die einzelnen Bilder des Bildstapels werden zunächst Maßnahmen zur Verbesserung der Bildqualität unterzogen, die auf dem technischen Gebiet der Bildbearbeitung an sich bekannt sind. Diese Maßnahmen beziehen sich insbesondere

- auf die Verringerung des Rauschens bzw. die Verbesserung des Signal-Rausch-Verhältnisses,
- auf den Ausgleich lokaler Empfindlichkeitsunterschiede der einzelnen Sensorelemente (Pixel) der Detektionseinrichtung,
- auf die Linearisierung des Dynamikbereichs der Sensorelemente,
- auf den Abzug von Rausch-Untergrund,
- auf die Zentrierung der Intensitätsschwerpunkte in den einzelnen Abbildungen auf jeweils einen vorgegebenen Ort, und/oder
- auf das Ausschneiden von relevanten Bildanteilen, etwa von Achs- und Feldpunkten unter Vermeidung von Randbeschnitt.

Diese Maßnahmen zur Verbesserung der Bildqualität sind insbesondere im Hinblick auf die mit den weiteren erfindungsgemäßen Verfahrensschritten erzielbare Genauigkeit von Vorteil.

Nach der Verbesserung der Bildqualität werden die Bildinformationen sowie alle relevanten Daten, wie auf das optische Abbildungssystem bezogene Einstellwerte und Systemgrößen sowie Informationen zur Probe (Probentyp, Probeneigenschaften) zur Verknüpfung anhand vorgegebener Rechenprogramme an eine Auswerteeinrichtung übergeben.

Mit der Übergabe an die Auswerteeinrichtung wird zugleich optional entschieden, ob eine Entfaltung der Bildinformationen vorzunehmen ist, um die Probeneinflüsse von den Einflüssen des Abbildungssystems und der Beleuchtung zu trennen. Diese Entscheidung wird beispielsweise in Abhängigkeit von dem Durchmesser eines Pinholes $d_{PH}$ in der Probe im Vergleich zu dem objektseitigen Airy-Durchmesser $d_{Airy}$ des Abbildungssystems und der zu erzielenden Genauigkeit getroffen. Die entsprechenden Steuerparameter zur Entfaltung, wie Pinholedurchmesser oder z.B. Parameter zu einer Tikhonov-Regularisierung, werden im Falle der Entscheidung zur Entfaltung ebenfalls in die Auswerteeinrichtung eingegeben.

Weiterhin sind vor der Auswertung festzulegen bzw. für die Auswertung vorzugeben:

- die gewünschte Genauigkeit der Auswertung bzw. des Auswerteergebnisses,
- die Anzahl der Kennzahlen, die bei der Bewertung der Abbildungsgüte bestimmt bzw. zugrunde gelegt werden sollen,
- die Auswahl eines zur Auswertung zu nutzenden Rechenprogrammes aus einem Vorrat verfügbarer Rechenprogramme,
- Abbruchkriterien für die Auswertung, beispielsweise die Größe des Restfehlers, die Zahl von Iterationszyklen oder die Dauer der Auswertung,
- ob die Auswertung einstufig oder mehrstufig erfolgen soll, wobei mit der mehrstufigen Auswertung das Ziel verfolgt wird, schneller zum Ergebnis zu kommen, die Konvergenz zu erhöhen und den Ablauf zu stabilisieren, und
- ob während der Auswertung die Defokussierung im Objektraum, d.h. die Verstellung der Probe relativ zur Objektebene oder auch die Verstellung des Objektivs relativ zur Probe berücksichtigt werden soll; in diesem Falle ist beispielsweise der Parameterraum für eine vorzusehende Iterationsberechnung zu erhöhen, damit Einflüsse, die von der Objektraumdefokussierung stammen, berücksichtigt werden können.

In einer weiteren Ausgestaltung des Verfahrensablaufs können Pupillenfunktionen berücksichtigt werden, wie beispielsweise Ergebnisse der Messung der realen Ausleuchtung über eine Pupillenabbildung mittels eines Bertrandsystems oder die theoretisch bestimmbare Apodisierung der Pupille als Eigenschaft des Designs des Abbildungssystems.

In einer besonders bevorzugten Ausgestaltung der Erfindung ist vorgesehen, daß die Ermittlung der Kennzahlen in einem ersten Schritt durch analytische Auswertung und in einem nachfolgenden zweiten Schritt durch iterative Auswertung erfolgt, wobei die Ergebnisse aus dem ersten Schritt als Startwerte in den zweiten Schritt übergeben und dort weiter verarbeitet werden, bis ein vorgegebenes Abbruchkriterium erreicht ist.

Der erste Schritt dient zum schnellen Auffinden des Zielbereichs der Ergebnisse für die Kennzahlen mit einem robusten Verfahren, kann allerdings bereits Ergebnisse mit begrenzter Genauigkeit liefern. Der zweite Schritt, der auf den noch ungenauen Ergebnissen des ersten Schrittes basiert bzw. diese als Startwerte nutzt, dient zur Ermittlung genauerer Ergebnisse.

Im ersten, analytischen Schritt wird zunächst ein erster Satz Kennzahlen bestimmt, die für die Abbildungsgüte äquivalent sind, in Form von Zernike-Polynomen bis zu einer gewünschten Ordnung. Dazu werden die in die Auswertung eingebrachten Informationen bzw. Daten beispielsweise nach dem Extended-Zernike-Verfahren analysiert.

Die sich mit der analytischen Auswertung ergebenden Kennzahlen genügen in der Regel noch nicht den Anforderungen an die Genauigkeit bei der Bewertung der Abbildungsgüte eines optischen Abbildungssystems. Deshalb ist der analytischen Bestimmung eine iterative Weiterbearbeitung nachgeordnet.

In den iterativen Auswerteprozeß fließen im wesentlichen ein die Bildinformationen, die Bildaufnahmeparameter des optischen Abbildungssystems, die im vorhergehenden Schritt der analytischen Auswertung ermittelten Kennzahlen zur Abbildungsgüte und Residuen als Restfehler zwischen retrievalter und gemessener Intensitätsverteilung.

Die iterative Phase der Auswertung kann entweder pixelweise mit Fehlerminimierung, z.B. anhand von Meritfunktionen oder abgeleiteten Verfahrensvarianten, oder flächig (den Bildinhalt berücksichtigend) vorgenommen werden. Bevorzugt wird die Verwendung iterativer Verfahren nach Gerchberg bzw. nach dem Gerchberg-Saxton-Prinzip, dem wahlweise Optimierungsverfahren nach Levenberg-Marquardt, Gauß oder der non-least-square-Methode zugeordnet werden, die der Fachwelt bekannt sind.

Daneben ist es auch denkbar, der iterativen Auswertung keine analytische Auswertung voranzustellen, sondern die Bildinformationen sowie Angaben zum Abbildungssystem unmittelbar der iterativen Auswertung zuzuführen, wobei bevorzugt die probenunabhängigen und gegebenenfalls entfalteten Bildinformationen zu berücksichtigen sind. Allerdings hat die Vorschaltung der analytischen Auswertung den wesentlichen Vorteil, daß für die Iteration Startwerte verfügbar sind, die die Konvergenz und die Sicherheit, das gesuchte absolute Minimum der Residuen wirklich zu finden, deutlich erhöhen.

Wird die Defokussierung bei der Aufnahme des Bildstapels im Objektraum vorgenommen und soll die Objektraumdefokussierung bei der Auswertung auch berücksichtigt werden, so ist der Parameterraum für die Iteration zu erhöhen, bevorzugt in linearer Entwicklung zu verdoppeln, damit jeder Kennzahl für die Abbildungsgüte ein oder mehrere den Defokus beschreibende Parameter zugeordnet werden können und so die Defokuseffekte bei der Iteration berücksichtigt werden. Die Kennzahlen haben dann im linearen Fall jeweils die Form

$$c_i = c_{i,f} + \Delta z * c_{i,d}$$

mit $c_{i,f}$ der Kennzahl der Abbildungsgüte, $\Delta z$ der Zustellung in Richtung der optischen Achse und $c_{i,d}$ einem Defokustherm.

Die Daten und Informationen, die der Iteration zugrunde zu legen sind, können wahlweise aus unterschiedlichen vorangegangenen Stufen der Meßwertermittlung oder dem Ergebnis theoretischer Systemberechnung übernommen werden.

Um die Auswertung robust und sicher bzw. störunanfällig zu gestalten, können in die iterative Auswertung bekannte global optimierende Verfahren einbezogen werden, beispielsweise "simulated annealing", oder auch selbstlernende Rechenvorgänge.

Die Ausgabe des Auswerteergebnisses ist vorgesehen in Form von Kennzahlen, die die Abbildungsgüte beschreiben, als Zernike-Koeffizienten, als Bildinformationen, in Form von Residuen als Restfehler zwischen retrievalter und gemessener Intensitätsverteilung und als den ermittelten Zernike-Koeffizienten zugeordneten Defokusparameter.

Das erfindungsgemäße Verfahren wird weiter dahingehend verwendet, die mit der Abbildungsgüte nun auch bekannten Abbildungsfehler aus den Bildern herauszurechnen, die von beliebigen, zunächst noch unbekannten Proben mit demselben Abbildungssystem aufgenommen werden.

Dazu werden die mit der zunächst noch unbekannten Probe gewonnenen Bildinformationen einer Nachbearbeitung unterworfen, in der die Eigenschaften des Abbildungssystems durch Herausfaltung berücksichtigt werden. Auf diese Weise werden bei der Probenabbildung die spezifischen Geräteeigenschaften berücksichtigt und zugleich auch korrigiert. Vorteilhaft ist es, bei der Herausfaltung der Eigenschaften des Abbildungssystems aus den Probenbildern zugleich auch den Einfluß der endlichen Objektgröße aus den Punktbildern zu korrigieren.

Auf diese Weise ist es ebenso möglich, den Einfluß beispielsweise eines Steppers in der Mikrolithographie in die Eigenschaften eines Bildes wieder per Faltung einzurechnen, um die Eigenschaften des Meßsystems zu korrigieren und so ein Bild zu erhalten, wie es der Stepper erzeugt hätte.

Die Änderung der Einstellebene zur Aufnahme des Bildstapels sollte vorteilhaft in vorzugebenden Schritten erfolgen.

Der Bildstapel kann mittels einer einzelnen ortsauflösenden Detektionseinrichtung aufgenommen werden, wobei jeweils eine Verstellung der Detektionseinrichtung oder der Probe erforderlich ist. Alternativ ist es aber auch möglich, zur Aufnahme des Bildstapels mehrere ortsauflösende Detektionseinrichtungen zu nutzen, die dann jeweils in den gewünschten Einstellebenen anzuordnen sind. Im letzteren Falle ist sowohl die gleichzeitige Aufnahme aller Abbildungen des Bildstapels als auch, je nach Ansteuerung, die zeitliche aufeinanderfolgende Aufnahme der zu einem Bildstapel gehörenden Abbildungen möglich.

Soll die Abbildungsgüte bezogen auf verschiedene Positionen im Gesichtsfeld des Abbildungssystems ermittelt werden, so kann in einer Ausgestaltung der Erfindung vorgesehen sein, daß der Bestimmung der Kennzahlen mehrere Proben zugrunde gelegt werden, die nebeneinander in der Probenhalterung positioniert sind. So liefern die Proben für jede Aufnahme Bildinformationen, die den jeweiligen Positionen zugeordnet werden können.

Ebenso ist es möglich, eine Probe mit mehreren Objekten im Gesichtsfeld des Abbildungssystems anzuordnen, um so in einem Bildstapel Informationen über die Bildfehler im Gesichtsfeld zu ermitteln. Bei der Auslegung der Probe in Bezug auf die Eigenschaften des Abbildungssystems ist es vorteilhaft darauf zu achten, daß sich die Objekte in der Anordnung gegenseitig nicht beeinflussen.

Als Proben kommen dabei binäre Objekte, d.h. reine Amplitudenobjekte, wie z.B. Lithographiemasken in Betracht.

In einer weiteren, besonders bevorzugten Ausgestaltung der Erfindung ist vorgesehen, daß die Ermittlung aller in die Auswertung einfließenden Daten und Informationen sowie auch die Auswertung einschließlich der Ausgabe der Auswerteergebnisse automatisch ablaufen.

Unter Umständen ist es vorteilhaft, bei der Gewinnung des Bildstapels eine Belichtungssteuerung zu verwenden, die trotz der veränderten Einstellebenen jeweils eine optimale Ausleuchtung der Probe gewährleistet, wodurch bereits während der Aufnahme das Signal-Rausch-Verhältnis in den Bildern optimiert wird.

Auch ist es denkbar, zur Ausleuchtung der Probe eine Laserstrahlung zu nutzen, die in der Objektebene eine Strahltaille aufweist, was typischer Weise zu einem niedrigen Sigma-Wert und auch zu einer gauß'schen Intensitätsverteilung in der Pupille des Abbildungssystems führt.

In einer Weiterentwicklung des erfindungsgemäßen Verfahrens ist die Bestimmung des Einflusses von zunächst noch unbekannten Proben auf die Amplituden- und Phasenfrontverteilung des Beleuchtungslichts, von dem diese Verteilung bekannt ist, mit folgenden Verfahrensschritten vorgesehen:

- Bestimmung der für das optische Abbildungssystem charakteristischen Wellenfrontdeformation anhand einer bezüglich ihrer Eigenschaften bekannten Probe,
- Austausch dieser Probe gegen eine zu untersuchende Probe mit zunächst noch unbekannten Eigenschaften,
- erneute Bestimmung der Wellenfrontdeformation unter Berücksichtigung des Einflusses der zu untersuchenden Probe nach den vorangehend dargelegten Verfahrensschritten,
- Trennung der Kennzahlen für die Abbildungsgüte, die sich unter Einfluß der unbekannten Probe ergeben haben, und der Kennzahlen für die Abbildungsgüte, die ohne Einfluß der unbekannten Probe ermittelt worden sind, und
- Bestimmung der Eigenschaften der zunächst unbekannten Probe aus dem Ergebnis dieser Trennung.

Die derartige Bestimmung der Eigenschaften von Proben schließt an die bisherigen Verfahrensschritte an und geht von einem betriebsbereiten optischen Abbildungssystem aus, für das die für die Abbildungsgüte charakteristischen Kennzahlen bereits vorliegen. Zu diesem Abbildungssystem sind auch die Abbildungsparameter bekannt bzw. können bestimmt werden, wie Wellenlänge des Beleuchtungslichts, numerische Apertur, Sigma, Abtastung, Vergrößerung, Bildgröße (in Pixeln) und Defokusparameter (zugeordnet zu den Kennzahlen für die Abbildungsgüte).

In dieses Abbildungssystem mit bekannten Abbildungseigenschaften wird eine zu untersuchende, noch unbekannte Probe eingelegt oder ein Bild einer Probe einprojeziert. Von der zu untersuchenden Probe wird eine Serie von Abbildungen, also wiederum ein Bildstapel, aufgenommen. Auch hier wird für jede Abbildung der Fokusabstand geändert wie bereits beschrieben, wobei auch hier eine defokusabhängige Belichtungssteuerung genutzt werden kann, um die Ausleuchtung der Probe an die jeweilige Fokusebene anzupassen.

Die so von der zu untersuchenden Probe gewonnenen Bilder werden hinsichtlich ihrer Qualität aufgearbeitet, wobei wiederum das Signal-Rausch-Verhältnisses etwa durch Dunkelbildkorrektur verbessert, eine Linearisierung der Pixel (flat fielding) vorgenommen, Rausch-Untergrund abgezogen, der Intensitätsschwerpunkt in jeder Abbildung zentriert, relevante Bildanteile ausgeschnitten und/oder eine Rauschfilterung vorgesehen werden können, so daß ein Bildstapel mit aussagefähigen, auswertbaren Bildern zur Weiterbearbeitung vorliegt.

Dabei kann die Zentrierung des Intensitätsschwerpunktes unter Ausnutzung der im Bild enthaltenen Datenwerte direkt oder aber über Korrelation vorgenommen werden, da die Bilder jetzt (im Gegensatz zu der Aufnahme eines Bildstapels zur Bestimmung der Kennzahlen des reinen Abbildungssystems) nicht am Rand des Kamerafeldes enden, oder rein mechanisch vorgenommen werden, wenn zuvor der laterale Ablauf in X,Y-Richtung in Bezug auf die z-Position für das Abbildungssystem in der jeweiligen Ebeneneinstellung bestimmt worden ist, gegebenenfalls auch mit Interpolation von Zwischenebenen.

Die nach dieser Aufbereitung vorhandenen Bildinformationen, die Informationen zum Abbildungssystem, die Informationen zu der auf jede Abbildung bezogenen Einstellung sowie die Kennzahlen für die Abbildungsgüte werden nun an eine Auswerteeinrichtung übergeben.

Für die Auswertung werden insbesondere vorgegeben:

- die gewünschte Genauigkeit der Auswertung bzw. des Auswerteergebnisses,
- die Anzahl der Kennzahlen zur Beschreibung der Abbildungsgüte, d.h. die Anzahl der Zernike-Koeffizienten, die der Auswertung bzw. dem Ergebnis zugrunde zu legen sind,
- Auswahl des zu verwendenden Rechenweges und Optimierungsverfahrens, sofern die Auswerteeinrichtung über mehrere geeignete Rechenalgorithmen verfügt,
- Vorgabe des Abbruchkriteriums für eine iterative Auswertung, wie beispielsweise Restfehler, Zahl der Iterationszyklen, Dauer der Auswertung,
- die einstufige oder mehrstufige Auswertung, wobei mit der mehrstufigen Auswertung das Ziel verfolgt wird, die Rechenzeit zu verkürzen, die Konvergenz und das sichere Finden des Ergebnisses bei der Iteration zu erhöhen oder auch den Rechenablauf zu stabilisieren,
- die Berücksichtigung einer eventuell vorgenommenen Objektraumdefokussierung, wozu dann der Parameterraum für die Iterationsberechtigung erhöht werden sollte, um eine Variation der Kennzahlen der Abbildungsgüte berücksichtigen zu können, die von der Objektraumdefokussierung stammen, sowie
- ein Kriterium für den Übergang von einer analytischen Auswertung zur einer iterativen Auswertung, wie beispielsweise Restfehler, Dauer der Auswertung usw.

Erfindungsgemäß werden bei mehrstufiger Auswertung in einem ersten Schritt die Kennzahlen für die Abbildungsgüte des Abbildungssystems mit der noch unbekannten Probe wiederum analytisch bestimmt. Hierzu werden nach dem Extended-Zernike-Verfahren Zernike-Polynome bis zu einer gewünschten Ordnung ermittelt.

In einem nachgeordneten zweiten Schritt der Auswertung erfolgt die iterative Bestimmung der Kennzahlen zur Abbildungsgüte, wobei die Ergebnisse der vorangegangen analytischen Auswertung als Startwerte für die Interation verwendet werden, um so die Konvergenz des Interationsverfahrens zu erhöhen.

Eingangsgrößen für die iterative Stufe der Auswertung sind wiederum die Bildinformationen, die Kennzahlen zur Abbildungsgüte (d.h. in Form von Zernike-Koeffizienten) und zum Vergleich Residuen als Restfehler zwischen retrievalter und gemessener Intensitätsverteilung in den Bildern der Probe sowie gegebenenfalls die Systemparameter für die Defokussiereigenschaften.

Die Iteration kann hier wiederum entweder pixelweise mit Fehlerminimierung z.B. nach der Gerchberg-Saxton-Methode mit nachgeordneten Optimierungsverfahren, z.B. nach der non-least-square Methode, Levenberg-Marquardt o.ä. vorgenommen werden.

Um die Auswertung robust und sicher bzw. störunanfällig zu gestalten, können in die iterative Auswertung bekannte global optimierende Verfahren einbezogen werden, beispielsweise "simulated annealing", oder auch selbstlernende Rechenvorgänge.

Bevorzugt sind pixelweise iterierende Verfahren anzuwenden, da Informationen über eine zunächst noch unbekannte Probenstruktur gewonnen werden sollen. Die Anwendung der flächig iterierenden Verfahren ist bevorzugt bei Proben mit lediglich weitläufigen Strukturen und verhältnismäßig geringen Gradienten zu empfehlen, wie beispielsweise bei der Untersuchung einiger biologischer Proben.

Eine Ausgestaltung des erfindungsgemäßen Verfahrens besteht darin, die Objektraumdefokussierung zu berücksichtigen und im Zusammenhang damit den Parameterraum für die Iteration zu vergrößern, so daß jeder für die Abbildungsgüte ermittelten Kennzahl Defokusparameter zugeordnet werden können und die Defokuseffekte bei der Iteration berücksichtigt sind. Hierbei können als Startwerte die Werte des Abbildungssystems alleine verwendet werden.

Im Ergebnis der Auswertung liegen dann Kennzahlen der Abbildungsgüte des Abbildungssystems vor, die von der zu untersuchende Probe beeinflußt sind und die demzufolge von den Kennzahlen abweichen, die vorher mit einer bekannten Probe bestimmt worden sind.

Zur Trennung der Probeneigenschaften von den Eigenschaften des Abbildungssystems kann nun wie folgt vorgegangen werden:

1. Es wird eine best-fokus-Bestimmung für den gewonnenen Bildstapel durchgeführt und basierend auf den Kennzahlen der Abbildungsgüte des Abbildungssystems eine simulierte Fokusserie einfachster Objektstrukturen, z.B. eines Punktbildes, einer Kante oder Spalte, nur für das Abbildungssystem an den Fokuspositionen des gemessenen Bildstapels berechnet. Durch Entfaltung der Bilder des gemessenen Bildstapels mit entsprechenden Bildern des simulierten Bildstapels werden die Bilder des gemessenen Bildstapels von den Eigenschaften des Abbildungssystems befreit. Aus diesem Bildstapel werden die Kennzahlen der Abbildungsgüte für die Probe alleine bestimmt. Mit den auf diese Weise ermittelten probenbezogenen Kennzahlen der Abbildungsgüte ist es möglich, auf die Amplituden-, Phasen- und/oder Intensitätsverteilung in der Objektebene für die Probe alleine zurückzurechnen, um so die Probeneigenschaften zu erhalten. Prinzipiell kann auch anstelle des simulierten Bildstapels eine gemessenen Bildserie verwendet werden, wobei allerdings mit geringerer Genauigkeit zu rechnen ist.

2. Die Kennzahlen des Abbildungssystems, wie sie nach dem eingangs beschriebenen Verfahrensschritten mit der bekannten Probe ermittelt worden sind, werden von den Kennzahlen des Abbildungssystems, die unter Einfluß der zu untersuchenden Probe ermittelt wurden, subtrahiert. Auf diese Weise werden die Probeneigenschaften separiert und können in geeigneter Form ausgegeben werden, beispielsweise in Form von Angaben zur räumlichen Amplituden- oder Intensitätsverteilung, zur räumlichen Phasenverteilung, als Iso-Amplituden, Iso-Intensitätsflächen oder Iso-Phasenflächen.
Insbesondere im Falle der pixelweisen Berechnungsmethoden kann ein "unwrapping" der Phasenflächen notwendig sein. Auch hier kann mit den so bestimmten probenbezogenen Kennzahlen der Abbildungsgüte noch auf die Amplituden-, Phasen- oder Intensitätsverteilung in der Objektebene zurückgerechnet werden, um die Probeneigenschaften zu präzisieren.

3. Anhand der Kennzahlen der Abbildungsgüte für das Abbildungssystem mit der bekannten Probe einerseits und der Kennzahlen der Abbildungsgüte des Abbildungssystems ohne die zu untersuchende Probe andererseits werden die optischen Feldverteilungen in der Objektebene durch Rückrechnung bestimmt und entfaltet und die Angaben zu den Eigenschaften der Probe alleine gewonnen.

Die Ergebnisausgabe erfolgt bevorzugt in Form von Bildinformationen, Kennzahlen zur Abbildungsgüte, d.h. Zernike-Koeffizienten, Defokusparametern zu den gemessenen Zernike-Koeffizienten, Angaben zur Amplitude, Phase oder Intensität, die auf den Einfluß der Probe zurückzuführen sind.

Prinzipiell erfolgt die Ergebnisausgabe bei den drei vorstehend angegebenen Varianten in derselben Weise, wobei jedoch in Abhängigkeit von der gewählten Variante verschiedenen Zusatzinformationen mit ausgegeben werden können.

Das erfindungsgemäße Verfahren soll nachfolgend anhand eines Ausführungsbeispieles erläutert werden. In den zugehörigen Zeichnungen zeigen

Fig.1    eine prinzipielle Darstellung optischer Baugruppen, die in einem optischen Abbildungssystem genutzt werden,

Fig.2    die vereinfachte Darstellung eines Bildstapels, bestehend aus mehreren, aus unterschiedlichen Fokuseinstellungen von einer Probe gewonnenen Abbildungen,

Fig.3    ein Beispiel für die Aufnahme eines Bildstapels bei Defokussierung innerhalb des Bildraumes,

Fig.4    ein Beispiel für die Aufnahme eines Bildstapels bei Defokussierung innerhalb des Objektraumes,

Fig.5    Darstellung eines konkret ausgeführten optischen Abbildungssystems,

Fig.6    die prinzipielle Vorgehensweise bei der Auswertung durch Iteration, und

Fig.7    Nachweis der Abbildungsgüte eines optischen Abbildungssystems nach Fig.5 in Form einer Werte-Tabelle.

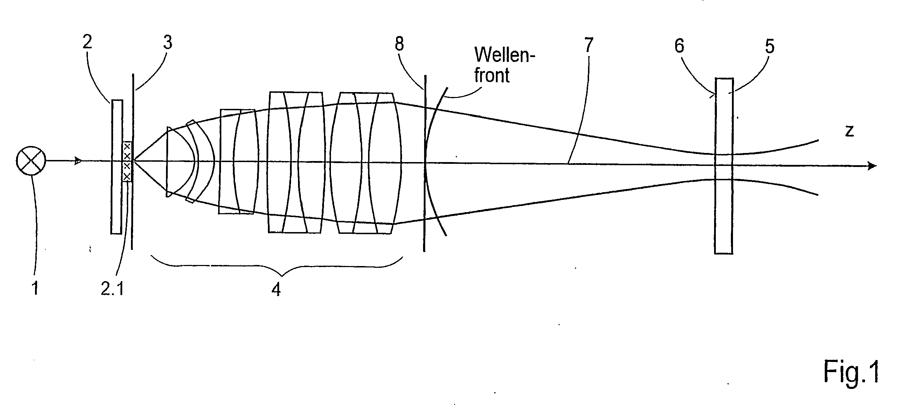

Die Baugruppen nach Fig.1 umfassen im wesentlichen eine Beleuchtungeinrichtung 1, einen Probenhalter 2 mit einer Probe 2.1, die in oder nahe der Objektebene 3 positioniert ist, ein Objektiv 4 und eine CCD-Kamera 5 als ortsauflösende Detektionseinrichtung, die in oder nahe der Bildebene 6 des Objektivs 4 positioniert ist. Die Baugruppen haben eine gemeinsame optische Achse 7, die nicht notwendigerweise geradlinig verläuft.

Die Baugruppen werden in einem ersten Verfahrensschritt so zueinander justiert, daß die Abbildung der Probe 2.1, die sowohl körperlich als auch in Form einer Abbildung vorhanden sein kann, auf die Empfangsfläche der CCD-Kamera 5 möglich ist. Die Empfangsfläche der CCD-Kamera 5 besteht aus einem Array von Sensorelementen (Pixeln), an deren Ausgang Informationen über die Intensität des auftreffenden, von der Probe beeinflußten, Beleuchtungslichtes abgreifbar sind.

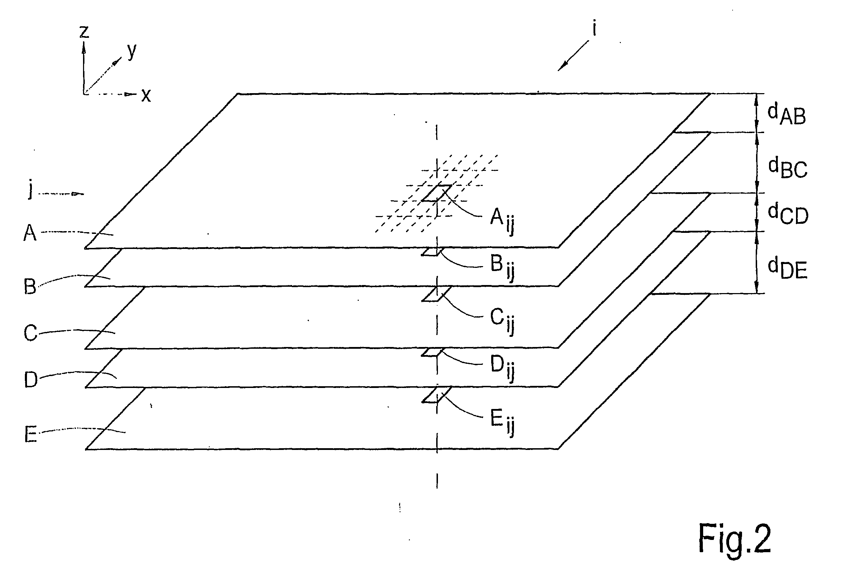

In einem zweiten Verfahrensschritt werden aus unterschiedlichen Defokusbereichen Abbildungen aufgenommen, die in ihrer Gesamtheit einen Bildstapel ergeben, wie vereinfacht in Fig.2 dargestellt. Die einzelnen Abbildungen sind mit A, B, C, D und E bezeichnet. Der Bildstapel erstreckt sich in Richtung der optischen Achse 7 über eine Tiefe, die der Summe aus den eingezeichneten Abständen $d_{ab}$ bis $d_{de}$ entspricht.

Die Anzahl der Abbildungen ist selbstverständlich nicht auf die hier dargestellte Anzahl beschränkt, sondern im wesentlichen frei wählbar. Allerdings ist zu empfehlen, eine ungerade Anzahl zu wählen, um so durch gezielte Einstellung zu erreichen, daß eine Abbildung aus der best-fokus-Ebene und die übrigen Abbildungen aus Defokusbereichen bei Defokussierung symetrisch zur best-fokus-Ebene gewonnen werden können.

Jede der dargestellten Abbildungen A bis E besteht aus einem Raster aus einer Vielzahl von in Zeilen i und Spalten j angeordneten Bildinformationen. Diese Bildinformationen sind Intensitätswerte, deren Größe dem Ausgangssignal eines jeweils zugeordneten Sensorelementes (Pixels) der Empfangsfläche der CCD-Kamera 5 entspricht und die das Bild der Probe repräsentieren.

In Fig.2 betreffen die in Richtung der optischen Achse 7 hintereinanderliegenden Bildinformationen $A_{ij}$, $B_{ij}$, $C_{ij}$, $D_{ij}$ und $E_{ij}$ idealerweise ein und denselben Bereich der Probe, aufgenommen aus unterschiedlichen Fokusebenen und dadurch auch mit unterschiedlicher Intensitätswerten.

Die Richtung der optischen Achse 7 entspricht dabei der Koordinatenrichtung Z des idealerweise kartesischen Koordinatensystems, während jede der Abbildungen in der von den Koordinaten X und Y aufgespannten Ebene liegt.

Prinzipiell können die Bildinformationen mit Hilfe eines VIS-Mikroskops, eines UV-Mikroskops oder eines anderen Abbildungssystems gewonnen werden.

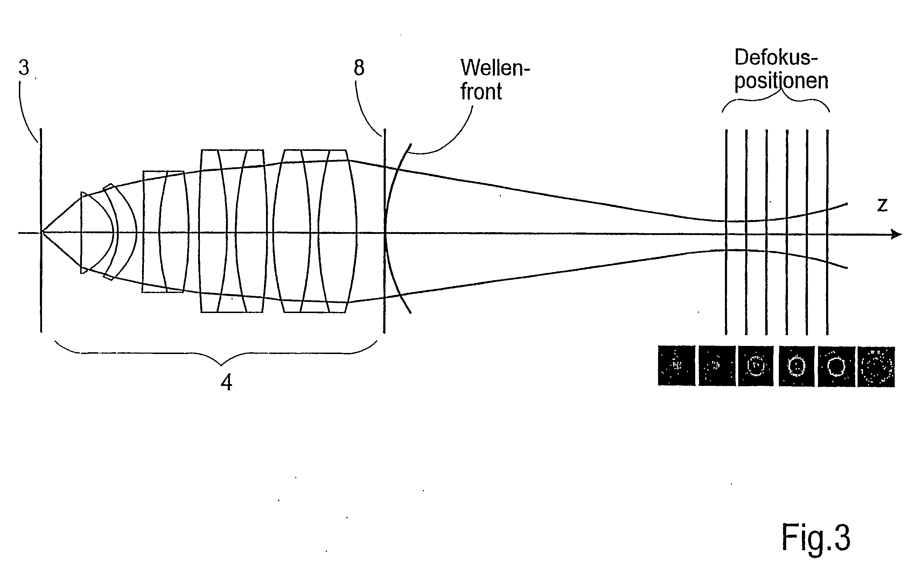

Wie in Fig.3 gezeigt, kann die Aufnahme des Bildstapels beispielsweise dadurch erfolgen, daß die CCD-Kamera 5 relativ zur Bildebene 6 verstellt wird, d.h. die Aufnahmen werden bei Defokussierung innerhalb des Bildraumes gewonnen. Der Abstand zwischen der Probe 2.1 und dem Objektiv 4 bleibt dabei unverändert. Ein Pinhole in der Probe 2.1 verursacht dabei in Abhängigkeit von den unterschiedlichen Einstellebenen die Intensitätskaustik wie in Fig.3 dargestellt.

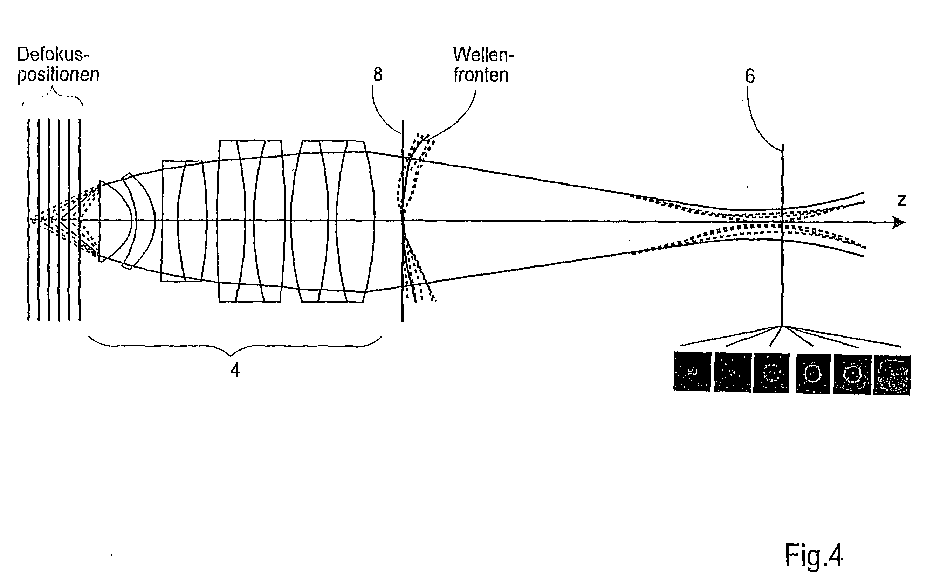

Alternativ dazu kann die Defokussierung auch durch Veränderung des Abstandes zwischen der Probe 2.1 und dem Objektiv 4 erzielt werden, also durch Defokussierung im Objektraum, wie dies in Fig.4 dargestellt ist. Hier bleibt beispielsweise der Abstand zwischen der Empfangsfläche der CCD-Kamera 5 und dem Objektiv 4 bzw. der Pupillenebene 8 konstant.

Mit der Verstellung der Probe in Richtung der optischen Achse 7 bzw. mit der Wahl unterschiedlicher Defokuspositionen ergeben sich unterschiedliche Wellenfrontdeformationen in der Pupillenebene 8, die zu unterschiedlichen Intensitätsschnitten führen, die, wie in Fig.4 gezeigt, den einzelnen Defokuspositionen zugeordnet werden.

Im nächsten Verfahrensschritt wird die Qualität der Bilder bzw. der Bildinformationen verbessert, indem beispielsweise nach bekannten Methoden der Bildbearbeitung das Rauschen unterdrückt wird, nur die Intensitätswerte für die spätere Auswertung berücksichtigt werden, die oberhalb eines Schwellwertes liegen, Meßdaten gefiltert und/oder einer Glättung unterzogen werden.

Damit werden zugleich lokale Empfindlichkeitsunterschiede der CCD-Kamera 5 ausgeglichen. Außerdem wird der Intesitätsschwerpunkt einer jeden Abbildung auf einen vorgegebenen Ort im Bild zentriert, so daß die Intensitätsschwerpunkte jeweils beispielsweise in den Positionen $A_{ij}$, $B_{ij}$, $C_{ij}$, $D_{ij}$ und $E_{ij}$ auf einer Geraden liegen (vgl. Fig.2).

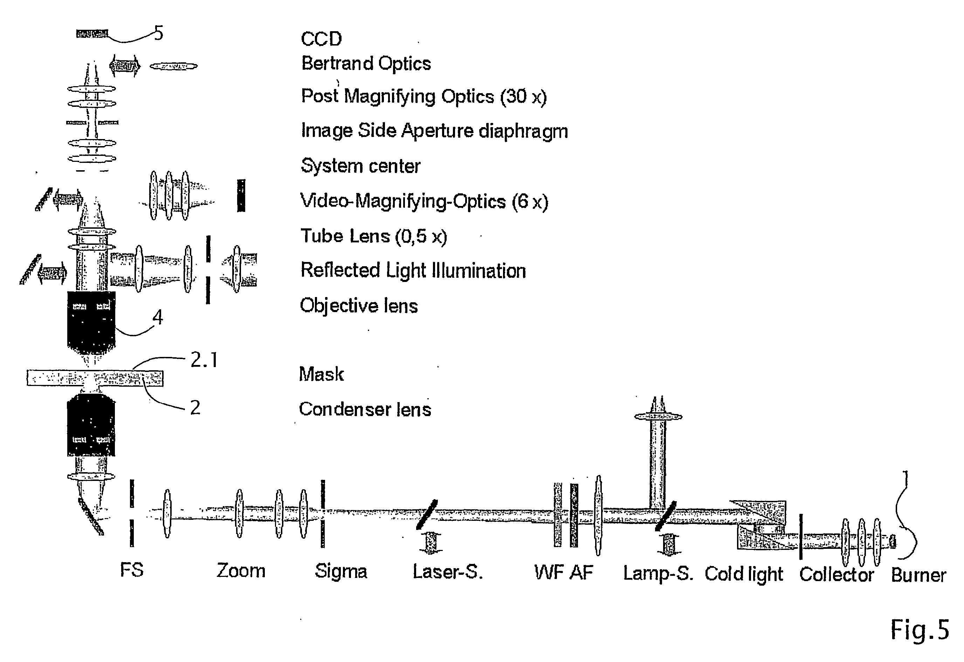

Die Erfindung wird nachfolgend anhand eines optischen Abbildungssystems nach Fig.5 ausführlicher erläutert, in das beispielsweise die in Fig.1 vereinfacht dargestellten Baugruppen Eingang finden.

Für dieses optische Abbildungssystem seien folgende Vorgaben angenommen:

- die Probe weist ein Pinhole mit einem Durchmesser $d_{PH}$ = 300 nm,
- es wird Beleuchtungslicht mit der Wellenlänge von 248 nm verwendet,
- die Pixelgröße an der Probe beträgt 45 nm,
- die numerische Apertur des Abbildungssystems ist 0,2,
- die Beleuchtungsapertur entspricht der numerischen Apertur des Abbildungssystems,
- die Beleuchtung der Probe erfolgt mit teilkohärentem Licht bei Sigma $\approx$ 0,8,
- der Durchmesser des Airy-Scheibchens in der Abbildung beträgt 1,512 $\mu$m,
- die Schärfentiefe ergibt sich zu 6,2 $\mu$m,
- die Defokussierung von Abbildung zu Abbildung innerhalb des Schärfentiefenbereichs wird vorgenommen bei $\pm$1 RE (RE=Rayleigh-Einheit), $\pm$3 RE und $\pm$0,8 RE bzw. $\pm$6,2 $\mu$m, $\pm$18,6 $\mu$m und $\pm$5 $\mu$m, und
- die Zahl der Abbildungen wird mit 21 gewählt.

Diese Daten sowie die Bildinformationen aus dem Bildstapel wurden der nachfolgenden Auswertung zugrunde gelegt, in der im konkreten Fall wie folgt verfahren worden ist:

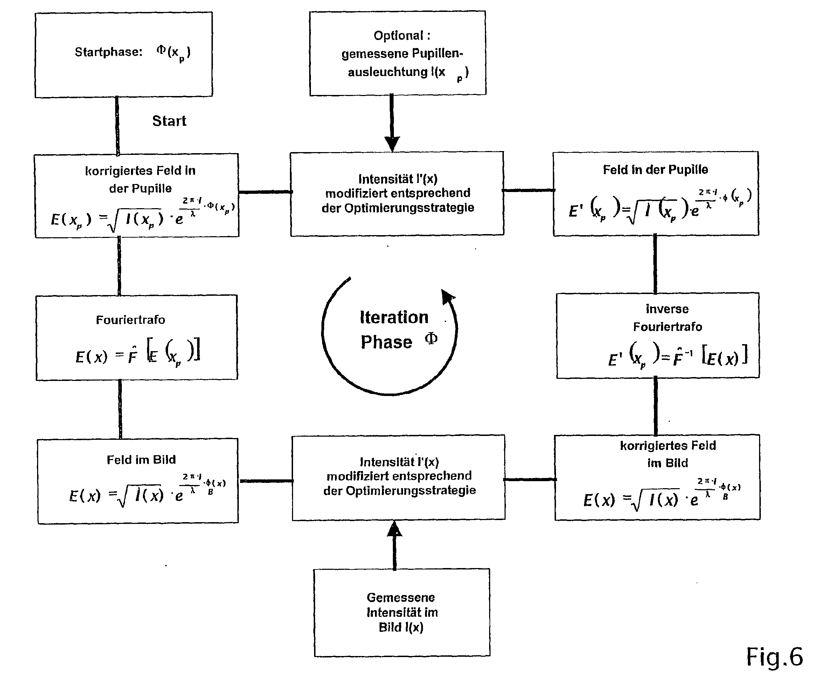

- analytische Bestimmung der Kennzahlen für die Abbildungsgüte des Abbildungssystems nach Extended Zernike,
- flächiger Iteration mit Optimierungsstrategie nach Marquardt-Levenberg in Iterationsschritten, wie beispielsweise in Fig.6 dargestellt,
- teilweiser Berücksichtigung Objektraumdefokussierung,

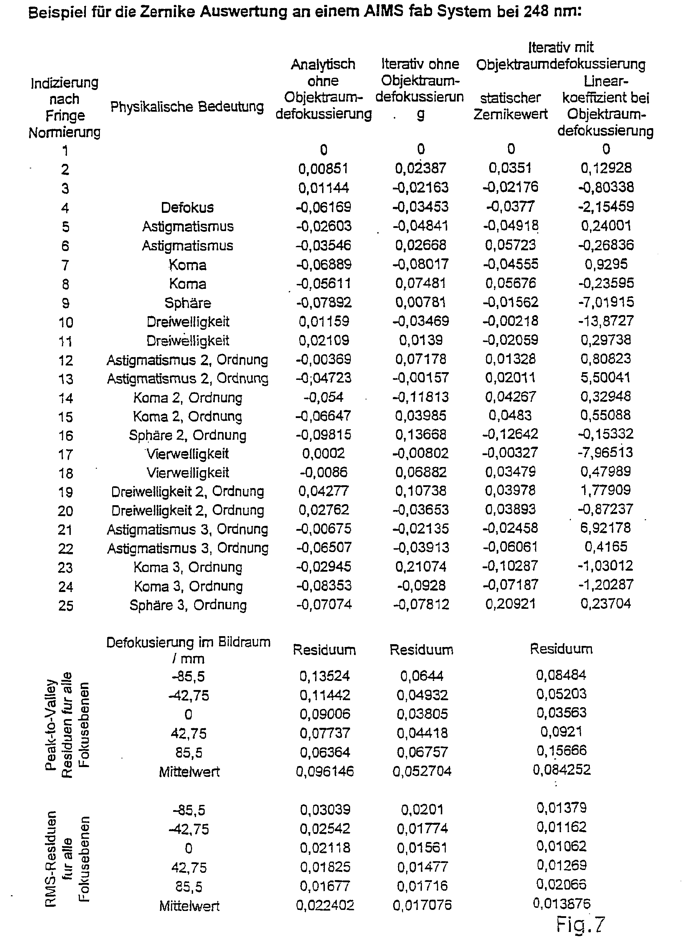

Im Ergebnis der Auswertung erhält man die in Fig.7 dargestellte Wertetabelle, in der u.a. auch die statischen Zernike-Werte angegeben sind, die sich in Abhängigkeit von einer Indizierung nach Fringe-Normierung 1 bis 25 als Beschreibung der Abbildungsgüte ergeben.

Damit liegt ein konkreter Nachweis der Abbildungsgüte für das Abbildungssystem nach Fig.5 vor. Dieser Nachweis kann beispielsweise als Zertifikat mit der Auslieferung eines entsprechenden Gerätes zur weiteren Verwendung an den Kunden übergeben oder dem Kundendienst zur Verfügung gestellt werden. So kann für den Kunden auch vor Ort die Qualität des Abbildungssystems regelmäßig oder bei Bedarf bestimmt und dokumentiert werden.

Das erfindungsgemäße Verfahren wurde vorwiegend im Zusammenhang mit mikroskopischen Abbildungssystemen erläutert. Dazu ist anzumerken, daß die Anwendung selbstverständlich auch im Zusammenhang mit anderen, insbesondere allen endlich-endlich abbildenden Systemen möglich und vorteilhaft ist, wie etwa bei Ferngläsern, Projektoren, geodätischen optischen Geräten, Kamerasystemen, fotografischen Geräten, medizinischen Beobachtungsgeräten und gegebenenfalls auch bei Stepper- bzw. Scanner-Optiken. Prinzipiell ist die Anwendung des erfindungsgemäßen Verfahrens für alle Optiken möglich, die eine Probe bzw. ein Objekt abbilden. Das erfindungsgemäße Verfahren ist von der Wellenlänge weitestgehend unabhängig und deshalb prinzipiell für alle Wellenlängen einsetzbar.

Der Begriff "Wellenfrontdeformation", der in der Erfindungsbeschreibung verwendet wird, bezieht sich auf Abweichungen gegenüber einer vorgegebenen Wellenfront, denn nicht immer ist gewünscht, daß ein Abbildungssystem eine ebene Wellenfront erzeugt. Dies gilt im übertragenen Sinne auch für den Begriff "Abbildungsfehler".

Von besonderem Vorteil ist die Möglichkeit der Stufung der erfindungsgemäßen Verfahrensschritte zur Ermittlung der Kennzahlen in analytische und iterative Schritte. Darüberhinaus ist auch eine Stufung der iterativen Verfahrensschritte an sich denkbar, indem die Iteration mehrstufig vorgenommen wird.

Hinsichtlich der Berücksichtigung der Objektraumdefokussierung bei der Ergebnisermittlung ist anzumerken, daß die erfindungsgenmäß vorgeschlagene Iteration zunächst ohne zusätzliche Parameter für die Objektraumdefokussierung ausgeführt werden sollte, um möglichst schnell in den Bereich der gewünschten Ergebniswerte zu kommen. Wenn der Bereich der Ergebniswerte gefunden ist, beispielsweise charakterisiert durch Übergangsparameter, wie das Verhältnis von Residuen zum Signal-Rausch-Verhältnis im jeweiligen Bild, Anzahl der Iterationsschleifen, Iterationsdauer, geringfügige Abweichung des Ergebnisses eines aktuellen Iterationszyklus zum vorangegangenen Iterationszyklus usw., dann sollte der Rechenweg um Parameter erweitert werden, die sich auf die Objektraumdefokussierung beziehen, und es kann zugleich auch der Parameterraum der Variablen vergrößert, im Falle der linearen Entwicklung der Objektraumdefokussierung verdoppelt werden.

Die direkte Vorgabe der Objektraumdefokussierung kann nachteiligerweise aufgrund der vielen vorzugebenden Parameter auch zu Fehlern führen. Auch aus diesem Grund kann zunächst iterativ ohne Berücksichtigung der Objektraumdefokussierung vorgegangen werden, wonach erst in weiteren, ebenfalls iterativen Verfahrensschritten die Objektraumdefokussierung berücksichtigt wird. Dadurch läßt sich eine bessere Stabilität und Konvergenz des Rechenvorgangs erzielen.

Denkbar ist es darüber hinaus auch, die Objektraumdefokussierung analytisch direkt zu berücksichtigen, was allerdings wiederum die mögliche Fehlerhäufigkeit zur Folge haben kann, oder der analytischen Berücksichtigung einen oder mehrere iterative Schritte nachzuordnen, je nach Vorgabe zunächst ohne, danach unter Berücksichtigung der Objektraumdefokussierung.

**Bezugszeichenliste**

1 Beleuchtungseinrichtung
2 Probenhalter
3 Objektebene
4 Objektiv
5 CCD-Kamera
6 Bildebene
7 optische Achse
8 Pupillenebene

**Patentansprüche**

1. Verfahren zur Bestimmung der Abbildungsgüte eines optischen Abbildungssystems, das im wesentlichen besteht aus den Baugruppen Beleuchtungssystem einschließlich Lichtquelle, Probenhalter mit Probe, Abbildungsoptiken und mindestens einer ortsauflösenden Detektionseinrichtung, umfassend folgende Verfahrensschritte:

- Justierung der Baugruppen zueinander so, daß Abbildungen einer Probe auf die Detektionseinrichtung möglich sind,
- Aufnehmen mehrerer Abbildungen der Probe aus verschiedenen Einstellebenen nahe der Fokusebene, wobei jeweils die Detektionseinrichtung relativ zur Bildebene, die Probe relativ zur Objektebene oder das Objektiv relativ zur Probe verstellt wird,
- Verbesserung der Bildqualität durch Bildbearbeitung, insbesondere zur Verringerung des Rauschens, zum Ausgleich lokaler Empfindlichkeitsunterschiede der Detektionseinrichtung und zur Zentrierung der Intensitätsschwerpunkte auf jeweils einen Ort in den Abbildungen,
- rechnerische Verknüpfung der ortsaufgelösten Bildinformationen, der auf das optische Abbildungssystem bezogenen Einstellwerte und Systemgrößen sowie Informationen zur Probe mit dem Ziel der Auswertung und der Ermittlung von Kennzahlen, die für die durch das Abbildungssystem verursachte Wellenfrontdeformation charakteristisch sind und
- Ausgabe der Kennzahlen und Zuordnung zum Abbildungssystem als Äquivalent für die Abbildungsgüte.
- wobei als Kennzahlen Zernike-Koeffizienten, die jeweils einer Einstellebene zugeordnet sind, ausgegeben werden.

2. Verfahren nach Anspruch 1, **dadurch gekennzeichnet, daß** zur Ermittlung der Kennzahlen

- in einem ersten Schritt zunächst eine analytische Auswertung erfolgt, und
- in einem nachfolgenden zweiten Schritt eine iterative Weiterbearbeitung der Ergebnisse aus dem ersten Schritt vorgenommen wird, bis ein vorgegebenes Abbruchkriterium erreicht ist.

3. Verfahren nach Anspruch 2, **dadurch gekennzeichnet, daß** mit der analytischen Auswertung der Bildinformationen die Bestimmung von Zernike-Polynomen bis zu einer vorgegebenen Ordnung vorgenommen wird.

4. Verfahren nach Anspruch 2 oder 3, **dadurch gekennzeichnet, daß** mit der iterativen Auswertung der Bildinformationen die Bestimmung von Zernike-Koeffizienten vorgenommen wird, wobei Methoden zugrunde gelegt werden, bei denen

- jede Wellenfläche aus dem Bildstapel von der Probe als Einheit betrachtet wird, oder
- eine pixelweise Auswertung erfolgt, und wobei
- die ermittelten Zernike-Koeffizienten den auszugebenden Kennzahlen entsprechen.

5. Verfahren nach einem der vorgenannten Ansprüche, **dadurch gekennzeichnet, daß** die Änderung der Einstellebene stets im Objektraum erfolgt, d.h. durch Änderung des Abstandes der Probe relativ zur Objektebene.

6. Verfahren nach Anspruch 5, **dadurch gekennzeichnet, daß** die Änderung der Einstellebene in vorgegebenen Schrittweiten erfolgt.

7. Verfahren nach Anspruch 5 oder 6, **dadurch gekennzeichnet, daß** die Zahl der Variablen beim iterativen Schritt der Auswertung gegenüber dem vorhergehenden analytischen Schritt erhöht, bevorzugt verdoppelt wird.

8. Verfahren nach einem der vorgenannten Ansprüche, wobei

- die Probe ein Pinhole mit einem Durchmesser $d_{PH}$ = 300 nm aufweist,
- Beleuchtungslicht mit der Wellenlänge von 248 nm verwendet wird,
- die Pixelgröße an der Probe 45 nm beträgt,
- die numerische Apertur des Abbildungssystems 0,2 ist,
- die Beleuchtungsapertur der numerischen Apertur des Abbildungssystems entspricht,
- die Beleuchtung der Probe mit teilkohärentem Licht mit $\sigma \approx 0,8$ erfolgt,
- der Durchmesser des Airy-Scheibchens in der Abbildung 1,512 $\mu$m beträgt,
- sich eine Schärfentiefe von 6,2 $\mu$m ergibt,
- die Defokussierung von Abbildung zu Abbildung innerhalb des Schärfentiefenbereichs bei $\pm 1$ RE (RE=Rayleigh-Einheit), $\pm 3$ RE und $\pm 0,8$ RE bzw. $\pm 6,2$ $\mu$m, $\pm 18,6$ $\mu$m und $\pm 5$ $\mu$m vorgenommen wird, und

- eine ungerade Anzahl von Abbildungen vorgegeben wird, bevorzugt eine Anzahl von 7, 11 oder 21 Abbildungen.

9. Verfahren nach einem der vorgenannten Ansprüche, **dadurch gekennzeichnet, daß** in Abhängigkeit von der Größe des Pinholes in der Probe eine Entfaltung der Bildinformationen vorgesehen ist, um den Einfluß der Pinholegröße auf das Ergebnis auszuschließen.

10. Verfahren nach einem der vorgenannten Ansprüche, **dadurch gekennzeichnet, daß** bei der Auswertung der Bildinformationen der Einfluß der Pupille des Abbildungssystems berücksichtigt wird, bevorzugt mittels eines Pupillenbildes, das beispielsweise unter Verwendung eines Bertrandsystems gewonnen wird.

11. Verfahren nach einem der vorgenannten Ansprüche, **dadurch gekennzeichnet, daß** die Pupillenfunktion im Hinblick auf Apodisierung vorgegeben wird.

12. Verfahren nach einem der vorgenannten Ansprüche, **dadurch gekennzeichnet, daß** mehrere Detektionseinrichtungen in unterschiedlichen Abständen zur Bildebene angeordnet sind und damit die Abbildungen aus den verschiedenen Einstellebenen wahlweise gleichzeitig oder bei entsprechender Ansteuerung auch zeitlich nacheinander aufgenommen werden.

13. Verfahren nach einem der vorgenannten Ansprüche, **dadurch gekennzeichnet, daß**

- mehrere Proben nebeneinander oder eine Probe mit mehreren nebeneinander angeordneten Objekten in der Probenhalterung positioniert und damit gleichzeitig Informationen über die Abbildungsgüte, bezogen auf die entsprechenden Positionen im Gesichtsfeld des Abbildungssystems, ermittelt werden, und/oder
- gleichzeitig Messungen mit mehreren verschiedenen Wellenlängen vorgenommen werden, um dispersive bzw. wellenlängenabhängige Effekte zu erfassen.

14. Verfahren nach einem der vorgenannten Ansprüche, **dadurch gekennzeichnet, daß** Proben mit binären Objekten, d.h. reinen Amplitudenobjekten, bevorzugt in Form runder oder quadratischer Pinholes, vorgesehen sind.

15. Verfahren nach einem der vorgenannten Ansprüche, **dadurch gekennzeichnet, daß** ein automatischer Ablauf bei der Bestimmung der Abbildungsgüte, beginnend mit der Positionierung einer Probe bis zur Ausgabe der Kennzahlen, vorgesehen ist.

16. Verfahren nach einem der vorgenannten Ansprüche, **dadurch gekennzeichnet, daß** eine Belichtungssteuerung vorgesehen ist, die in Abhängigkeit von der Veränderung der Einstellebene eine optimale Ausleuchtung der Probe gewährleistet und dadurch das Signal-Rausch-Verhältnis in den Bildern optimiert wird.

17. Verfahren nach einem der vorgenannten Ansprüche, **dadurch gekennzeichnet, daß** zur Ausleuchtung der Probe eine Laserstrahlung mit Strahltaille in der Objektebene vorgesehen ist, um einen niedrigen Sigma-Wert und eine gauß'sche Intensitätsverteilung in der Pupille zu erzielen.

18. Verfahren zur Bestimmung des Einflusses verschiedener Proben auf die Amplituden- und Phasenfrontverteilung des Beleuchtungslichts, **gekennzeichnet durch** folgende Verfahrensschritte:

     - Bestimmung der für das optische Abbildungssystem charakteristischen Wellenfrontdeformation in Form von Kennzahlen nach den Ansprüchen 1 bis 17 anhand einer Probe mit bekannten, definierten optischen Eigenschaften,
     - Austausch der bekannten Probe gegen eine zu untersuchende Probe mit noch unbekannten optischen Eigenschaften,
     - erneute Bestimmung der Wellenfrontdeformation in Form von Kennzahlen nach den Ansprüchen 1 bis 17 unter Einfluß der zu untersuchenden Probe,
     - Ermittlung des Einflusses der zu untersuchenden Probe anhand der Unterschiede der Kennzahlen für die Abbildungsgüte unter Einfluß der definierten Probe und der Kennzahlen für die Abbildungsgüte ohne Einfluß der zu untersuchenden Probe,
     - Ermittlung von Eigenschaften der zu untersuchenden Probe aus dem Unterschied der Kennzahlen.

19. Verfahren nach Anspruch 18, **dadurch gekennzeichnet, daß** die mit der zunächst noch unbekannten Probe gewonnenen Bildinformationen einer Nachbearbeitung unterworfen werden, wobei die Eigenschaften des Abbildungssystems von den Eigenschaften der Probe bereinigt wird, die zur Charakterisierung des Abbildungssystems verwendet wurde, und dadurch bei der Abbildung der unbekannten Probe zugleich die spezifischen Geräteeigenschaften korrigiert werden.

20. Verfahren nach Anspruch 19, **dadurch gekennzeichnet, daß** bei der Nachbearbeitung der Bildinformationen zugleich auch der Einfluß spezieller Probeneigenschaften, insbesondere die Größe eines beobachteten Objekts, aus den Bildinformationen korrigiert wird.

21. Verfahren nach Anspruch 19 oder 20, **dadurch gekennzeichnet, daß** insbesondere der Einfluß eines Steppers in der Mikrolithographie in die Eigenschaften eines Probenbildes per Faltung wieder eingerechnet wird.

22. Verfahren nach Anspruch 18 oder 19, **dadurch gekennzeichnet, daß** als Proben Lithographiemasken, insbesondere Masken mit phasenverschiebender Wirkung, vorgesehen sind.

## Claims

1. Method of determining the image quality of an optical imaging system which consists substantially of the following assemblies: illumination system, including light source, sample holder with sample, imaging optics, and at least one spatially resolving detection device,
   comprising the method steps of:

     - Adjusting the assemblies relative to one another such that it is possible to image a sample on to the detection device;
     - Recording several images of the sample from different adjusting planes near the focus plane, wherein in each case the detection device is adjusted relative to the image plane, the sample is adjusted relative to the object plane or the objective is adjusted relative to the sample;
     - Improving the image quality by means of image processing, in particular to reduce noise, to compensate for local differences in sensitivity of the detection device, and to centre the intensity centroids on to a respective location in the images;
     - Computationally linking the spatially resolved image information, the adjustment values and system variables related to the optical imaging system, and information relating to the sample with the aim of evaluating and determining characteristic numbers which are characteristic of the wavefront deformation caused by the imaging system; and
     - Outputting the characteristic numbers and allocating same to the imaging system as an equivalent for the image quality,
     - wherein Zernike coefficients which are each allocated to an adjusting plane are output as characteristic numbers.

2. Method as claimed in claim 1, **characterised in that** in order to determine the characteristic numbers

- an analytic evaluation is initially performed in a first step, and
- in a subsequent second step iterative further processing of the results from the first step is carried out until a specified termination criterion is reached.

3. Method as claimed in claim 2, **characterised in that** the determination of Zernike polynomials up to a specified order is carried out with the analytic evaluation of the image information.

4. Method as claimed in claim 2 or 3, **characterised in that** the determination of Zernike coefficients is carried out with the iterative evaluation of the image information, wherein this is based upon methods in which

   - each wave surface from the image stack of the sample is viewed as a unit, or
   - a pixel-by-pixel evaluation is carried out, and wherein
   - the determined Zernike coefficients correspond to the characteristic numbers which are to be output.

5. Method as claimed in any one of the preceding claims, **characterised in that** the change in the adjusting plane is always performed in the object space, i.e., by changing the distance of the sample relative to the object plane.

6. Method as claimed in claim 5, **characterised in that** the change in the adjusting plane is performed in specified increments.

7. Method as claimed in claim 5 or 6, **characterised in that** the number of variables in the iterative step of the evaluation is increased, preferably doubled, with respect to the preceding, analytical step.

8. Method as claimed in any one of the preceding claims, wherein

   - the sample has a pinhole with a diameter $d_{PH}$= 300 nm,
   - illumination light with the wavelength of 248 nm is used,
   - the pixel size on the sample is 45 nm,
   - the numerical aperture of the imaging system is 0.2,
   - the illumination aperture corresponds to the numerical aperture of the imaging system,
   - illumination of the sample is performed with partially coherent light at $\sigma \approx 0.8$,
   - the diameter of the Airy disk in the image is 1.512 $\mu$m,
   - a depth of focus of 6.2 $\mu$m is achieved,

- the defocusing from image to image is carried out within the depth of focus range at $\pm$ 1 RE (RE = Rayleigh unit), $\pm$ 3 RE and $\pm$ 0.8 RE or $\pm$ 6.2 $\mu$m, $\pm$ 18.6 $\mu$m and $\pm$ 5 $\mu$m, and
- an odd number of images is specified, preferably a number of 7, 11 or 21 images.

9. Method as claimed in any one of the preceding claims, **characterised in that** in dependence upon the size of the pinhole in the sample a deconvolution of the image information is provided in order to exclude the influence of the pinhole size upon the result.

10. Method as claimed in any one of the preceding claims, **characterised in that** the influence of the pupil of the imaging system is taken into account in the evaluation of the image information, preferably by means of a pupil image which is obtained e.g. using a Bertrand system.

11. Method as claimed in any one of the preceding claims, **characterised in that** the pupil function is predetermined with regard to apodization.

12. Method as claimed in any one of the preceding claims, **characterised in that** several detection devices are arranged at different spaced intervals with respect to the image plane and the images are thus recorded from the different adjusting planes at the same time or even successively in time under a corresponding control.

13. Method as claimed in any one of the preceding claims, **characterised in that**

   - several samples arranged adjacent to one another or a sample with several objects arranged adjacent to one another is/are positioned in the sample holder and information relating to the image quality is thus determined simultaneously in relation to the corresponding positions in the visual field of the imaging system, and/or
   - measurements are carried out simultaneously with a plurality of different wavelengths in order to detect dispersive or wavelength-dependent effects.

14. Method as claimed in any one of the preceding claims, **characterised in that** samples with binary objects, i.e., pure amplitude objects, preferably in the form of round or square pinholes, are provided.

15. Method as claimed in any one of the preceding claims, **characterised in that** an automatic sequence is provided in the determination of the image quality, beginning with the positioning of a sample up to the output of the characteristic numbers.

**16.** Method as claimed in any one of the preceding claims, **characterised in that** an exposure controller is provided which ensures an optimal illumination of the sample in dependence upon the change in the adjusting plane, and the signal-to-noise ratio is thereby optimised in the images.

**17.** Method as claimed in any one of the preceding claims, **characterised in that** a laser beam having a beam waist is provided in the object plane for illuminating the sample in order to achieve a low sigma value and a Gaussian intensity distribution in the pupil.

**18.** Method of determining the influence of different samples upon the amplitude distribution and phase front distribution of the illumination light, **characterised by** the method steps of:

- Determining the wavefront deformation characteristic of the optical imaging system in the form of characteristic numbers as claimed in claims 1 to 17 using a sample with known, defined optical characteristics,
- Exchanging the known sample for a sample which is to be examined and has still unknown optical characteristics,
- Determining anew the wavefront deformation in the form of characteristic numbers as claimed in claims 1 to 17 under the influence of the sample to be examined;
- Determining the influence of the sample to be examined by the differences in the characteristic numbers for the image quality under the influence of the defined sample and the characteristic numbers for the image quality without the influence of the sample to be examined, and
- Determining characteristics of the sample to be examined from the difference in the characteristic numbers.

**19.** Method as claimed in claim 18, **characterised in that** the image information obtained with the initially still unknown sample is subjected to subsequent processing, wherein the characteristics of the imaging system are purged of the characteristics of the sample which was used to characterise the imaging system, and the specific device characteristics are thereby corrected at the same time during imaging of the unknown sample.

**20.** Method as claimed in claim 19, **characterised in that** the influence of specific sample characteristics, in particular the size of an observed object, is also simultaneously corrected from the image information during subsequent processing of the image information.

**21.** Method as claimed in claim 19 or 20, **characterised in that** in particular the influence of a stepper in microlithography is factored into the characteristics of a sample image by convolution.

**22.** Method as claimed in claim 18 or 19, **characterised in that** lithography masks, in particular masks having a phase-shifting effect, are provided as samples.

**Revendications**

**1.** Procédé pour déterminer la qualité de représentation d'un système de représentation optique, qui comprend essentiellement les ensembles système d'éclairage, y compris la source lumineuse, porte-échantillon avec échantillon, optiques de représentation et au moins un dispositif de détection à résolution locale,
comprenant les étapes de procédé suivantes :

- ajustage des ensembles les uns par rapport aux autres de telle sorte que des représentations d'un échantillon sur le dispositif de détection soient possibles,
- enregistrement de plusieurs représentations de l'échantillon à partir de différents plans de réglage à proximité du plan focal, le dispositif de détection étant déplacé par rapport au plan d'image, l'échantillon par rapport au plan d'objet ou l'objectif par rapport à l'échantillon,
- amélioration de la qualité d'image par traitement d'image, en particulier pour réduire le bruit, pour compenser des différences de sensibilité locales du dispositif de détection et pour centrer les points principaux d'intensité sur respectivement un emplacement sur les représentations,
- enchainement de calcul des informations d'image résolue localement, des valeurs de réglage et grandeurs du système rapportées au système de reproduction optique et des informations concernant l'échantillon dans le bus d'analyser et de déterminer des indices qui sont caractéristiques de la déformation du front d'onde provoquée par le système de représentation et
- édition des indices et attribution au système de représentation comme équivalent pour la qualité de représentation,
- dans lequel des coefficients de Zernike, qui sont attribués respectivement à un plan de réglage, sont édités en tant qu'indices.

**2.** Procédé selon la revendication 1, **caractérisé en ce que**, pour déterminer les indices,

- une interprétation analytique est effectuée d'abord dans une première étape, et,

- dans une seconde étape successive, un retraitement itératif des résultats provenant de la première étape est effectué jusqu'à ce qu'un système d'interruption prédéfini soit obtenu.

3. Procédé selon la revendication 2, **caractérisé en ce que**, avec l'évaluation analytique des informations d'image, la détermination de polynômes de Zernike est effectuée jusqu'à un ordre prédéfini.

4. Procédé selon la revendication 2 ou 3, **caractérisé en ce que**, avec l'analyse itérative des informations d'image, la détermination de coefficients de Zernike est définie, dans lequel des méthodes sont prises pour base, dans lesquelles

   - chaque surface ondulatoire provenant de la pile d'images de l'échantillon est examinée en tant qu'unité, ou
   - une analyse pixel par pixel est effectuée, et dans lequel
   - les coefficients de Zernike déterminés correspondent aux indices à éditer.

5. Procédé selon l'une quelconque des revendications précédentes, **caractérisé en ce que** la modification du plan de réglage s'effectue toujours dans l'espace d'objet, c'est-à-dire par la modification de la distance de l'échantillon par rapport au plan d'objet.

6. Procédé selon la revendication 5, **caractérisé en ce que** la modification du plan de réglage intervient dans le cadre d'incréments prédéfinis.

7. Procédé selon la revendication 5 ou 6, **caractérisé en ce que** le nombre des variables est augmenté, de préférence doublé, lors de l'étape itérative de l'analyse par rapport à l'étape analytique précédente.

8. Procédé selon l'une quelconque des revendications précédentes, dans lequel

   - l'échantillon présente un trou d'épingle d'un diamètre $d_{PH} = 300$ nm,
   - de la lumière d'éclairage avec la longueur d'onde de 248 nm est utilisée,
   - la grandeur de pixel sur l'échantillon est de 45 nm,
   - l'ouverture numérique du système de représentation est de 0,2,
   - l'ouverture d'éclairage correspond à l'ouverture numérique du système de représentation,
   - l'éclairage de l'échantillon s'effectue avec une lumière partiellement cohérente avec $\sigma \approx 0,8$,
   - le diamètre du disque d'Airy dans la représentation est de 1,512 $\mu$m,
   - on obtient une profondeur de champ de 6,2 $\mu$m,

   - la défocalisation de représentation à représentation est effectuée à l'intérieur de la plage de grandeur de champ avec $\pm$ 1 RE (RE = unité de Rayleigg), $\pm$ 3 RE et $\pm$ 0,8 RE ou $\pm$ 6,2 $\mu$m, $\pm$ 18,6 $\mu$m et $\pm$ 5 $\mu$m, et
   - un nombre impair de représentations est prédéfini, de préférence un nombre de 7,11 ou 21 représentations.

9. Procédé selon l'une quelconque des revendications précédentes, **caractérisé en ce que**, en fonction de la grandeur du trou d'épingle dans l'échantillon, il est prévu un déploiement des informations d'image, afin d'exclure l'influence de la grandeur du trou d'épingle sur le résultat.

10. Procédé selon l'une quelconque des revendications précédentes, **caractérisé en ce que**, lors de l'analyse des informations d'image, l'influence de la pupille du système de représentation est prise en compte, de préférence au moyen d'une image de pupille, qui est obtenue par exemple en utilisant un système de Bertrand.

11. Procédé selon l'une quelconque des revendications précédentes, **caractérisé en ce que** la fonction de pupille est prédéfinie en ce qui concerne l'apodisation.

12. Procédé selon l'une quelconque des revendications précédentes, **caractérisé en ce que** plusieurs dispositifs de détection sont disposés à différentes distances du plan d'image et de ce fait les représentations à partir des différents plans d'image sont enregistrées au choix simultanément ou, dans le cas d'une activation appropriée, également de façon successive dans le temps.

13. Procédé selon l'une quelconque des revendications précédentes, **caractérisé en ce que**

   - plusieurs échantillons sont positionnés les uns à coté des autres ou un échantillon avec plusieurs objets disposés les uns à côté des autres sont positionnés dans le support d'échantillon et donc en même temps des informations sur la qualité de représentation, par rapport aux positions correspondantes dans le champ visuel du système de représentation, sont déterminées et/ou
   - en même temps des mesures sont effectuées avec plusieurs longueurs d'onde différentes, afin d'enregistrer des effets dispersifs et dépendants de la longueur d'onde.

14. Procédé selon l'une quelconque des revendications précédentes, **caractérisé en ce que** des échantillons avec des objets binaires, c'est-à-dire des objets d'amplitude purs, de préférence sous la forme de trous d'épingle ronds ou carrés sont prévus.

15. Procédé selon l'une quelconque des revendications précédentes, **caractérisé en ce qu'**il est prévu un déroulement automatique pour la détermination de la qualité de représentation, en commençant par le positionnement d'un échantillon jusqu'à la sortie des indices.

16. Procédé selon l'une quelconque des revendications précédentes, **caractérisé en ce qu'**une commande d'éclairage est prévue, laquelle garantit un éclairage optimal de l'échantillon en fonction de la modification du plan de réglage et de ce fait le rapport signal-bruit est optimisé sur les images.

17. Procédé selon l'une quelconque des revendications précédentes, **caractérisé en ce que**, pour l'éclairage de l'échantillon, il est prévu un rayonnement laser avec une taille de faisceau dans le plan d'objet, afin d'obtenir une faible valeur sigma et une répartition d'intensité gaussienne dans la pupille.

18. Procédé pour déterminer l'influence de différents échantillons sur la répartition de l'amplitude et à la répartition du front de phase de la lumière d'éclairage, **caractérisé par** les étapes de procédé suivantes :

    - détermination de la déformation du front d'onde caractéristique du système de représentation optique sous la forme d'indices selon les revendications 1 à 17 à l'aide d'un échantillon avec des propriétés visuelles connues et définies,
    - remplacement de l'échantillon connu par un échantillon à déterminer avec des propriétés optiques encore inconnues,
    - détermination renouvelée de la déformation du front d'onde sous la forme d'indices selon les revendications 1 à 17 avec l'influence de l'échantillon à étudier,
    - détermination de l'influence de l'échantillon à étudier à l'aide des différences des indices pour la qualité de représentation avec l'influence de l'échantillon défini et des indices pour la qualité de représentation sans l'influence de l'échantillon à étudier,
    - détermination des propriétés de l'échantillon à étudier à partir de la différence des indices.

19. Procédé selon la revendication 18, **caractérisé en ce que** les informations d'image obtenues avec l'échantillon encore inconnu pour commencer sont soumises à un traitement ultérieur, les propriétés du système de représentation étant corrigées par les propriétés de l'échantillon qui ont été utilisées pour la caractérisation du système de représentation et les propriétés d'appareil spécifique sont corrigées en même temps lors de la représentation de l'échantillon non connu.

20. Procédé selon la revendication 19, **caractérisé en ce que**, lors du retraitement des informations d'image, on corrige en même temps également l'influence de propriétés d'échantillon spéciales, en particulier la grandeur d'un objet observé, à partir des informations d'image.

21. Procédé selon la revendication 19 ou 20, **caractérisé en ce qu'**en particulier l'influence d'un stepper dans la microlithographie est incorporée à nouveau dans les propriétés et une image d'échantillon par convolution.

22. Procédé selon la revendication 18 ou 19, **caractérisé en ce que** des masques de lithographie, en particulier des masques avec un effet de décalage de phase, sont prévus comme échantillons.

Fig.1

Wellenfront

z

Fig.2

EP 1 631 809 B1

Fig.3

Defokus-positionen

8

Wellen-fronten

6

z

4

Fig.4

CCD

Bertrand Optics

Post Magnifying Optics (30 x)

Image Side Aperture diaphragm

System center

Video-Magnifying-Optics (6 x)

Tube Lens (0,5 x)

Reflected Light Illumination

Objective lens

Mask

Condenser lens

FS  Zoom  Sigma  Laser-S.  WF AF  Lamp-S. Cold light  Collector  Burner

Fig.5

EP 1 631 809 B1

Startphase: $\Phi(x_p)$

Optional: gemessene Pupillen-ausleuchtung $I(x_p)$

**Start**

korrigiertes Feld in der Pupille

$$E(x_p) = \sqrt{I(x_p)} \cdot e^{\frac{2\pi \cdot i}{\lambda} \cdot \Phi(x_p)}$$

Intensität I'(x) modifiziert entsprechend der Optimierungsstrategie

Feld in der Pupille

$$E'(x_p) = \sqrt{I(x_p)} \cdot e^{\frac{2\pi \cdot i}{\lambda} \cdot \phi(x_p)}$$

Fouriertrafo

$$E(x) = \hat{F}\left[E(x_p)\right]$$

**Iteration Phase** $\Phi$

inverse Fouriertrafo

$$E'(x_p) = \hat{F}^{-1}\left[E(x)\right]$$

Feld im Bild

$$E(x) = \sqrt{I(x)} \cdot e^{\frac{2\pi \cdot i}{\lambda} \cdot \phi(x)_B}$$

Intensität I'(x) modifiziert entsprechend der Optimierungsstrategie

korrigiertes Feld im Bild

$$E(x) = \sqrt{I(x)} \cdot e^{\frac{2\pi \cdot i}{\lambda} \cdot \phi(x)_B}$$

Gemessene Intensität im Bild I(x)

Fig.6

## Beispiel für die Zernike Auswertung an einem AIMS fab System bei 248 nm:

| Indizierung nach Fringe Normierung | Physikalische Bedeutung | Analytisch ohne Objektraum-defokussierung | Iterativ ohne Objektraum-defokussierung | Iterativ mit Objektraumdefokussierung | |
|---|---|---|---|---|---|
| | | | | statischer Zernikewert | Linear-koeffizient bei Objektraum-defokussierung |
| 1 | | 0 | 0 | 0 | 0 |
| 2 | | 0,00851 | 0,02387 | 0,0351 | 0,12928 |
| 3 | | 0,01144 | -0,02163 | -0,02176 | -0,80338 |
| 4 | Defokus | -0,06169 | -0,03453 | -0,0377 | -2,15459 |
| 5 | Astigmatismus | -0,02603 | -0,04841 | -0,04918 | 0,24001 |
| 6 | Astigmatismus | -0,03546 | 0,02668 | 0,05723 | -0,26836 |
| 7 | Koma | -0,06889 | -0,08017 | -0,04555 | 0,9295 |
| 8 | Koma | -0,05611 | 0,07481 | 0,05676 | -0,23595 |
| 9 | Sphäre | -0,07892 | 0,00781 | -0,01562 | -7,01915 |
| 10 | Dreiwelligkeit | 0,01159 | -0,03469 | -0,00218 | -13,8727 |
| 11 | Dreiwelligkeit | 0,02109 | 0,0139 | -0,02059 | 0,29738 |
| 12 | Astigmatismus 2, Ordnung | -0,00369 | 0,07178 | 0,01328 | 0,80823 |
| 13 | Astigmatismus 2, Ordnung | -0;04723 | -0,00157 | 0,02011 | 5,50041 |
| 14 | Koma 2, Ordnung | -0,054 | -0,11813 | 0,04267 | 0,32948 |
| 15 | Koma 2, Ordnung | -0,06647 | 0,03985 | 0,0483 | 0,55088 |
| 16 | Sphäre 2, Ordnung | -0,09815 | 0,13668 | -0,12642 | -0,15332 |
| 17 | Vierwelligkeit | 0,0002 | -0,00802 | -0,00327 | -7,96513 |
| 18 | Vierwelligkeit | -0,0086 | 0,06882 | 0,03479 | 0,47989 |
| 19 | Dreiwelligkeit 2, Ordnung | 0,04277 | 0,10738 | 0,03978 | 1,77909 |
| 20 | Dreiwelligkeit 2, Ordnung | 0,02762 | -0,03653 | 0,03893 | -0,87237 |
| 21 | Astigmatismus 3, Ordnung | -0,00675 | -0,02135 | -0,02458 | 6,92178 |
| 22 | Astigmatismus 3, Ordnung | -0,06507 | -0,03913 | -0,06061 | 0,4165 |
| 23 | Koma 3, Ordnung | -0,02945 | 0,21074 | -0,10287 | -1,03012 |
| 24 | Koma 3, Ordnung | -0,08353 | -0,0928 | -0,07187 | -1,20287 |
| 25 | Sphäre 3, Ordnung | -0,07074 | -0,07812 | 0,20921 | 0,23704 |

| | Defokusierung im Bildraum / mm | Residuum | Residuum | Residuum |
|---|---|---|---|---|
| Peak-to-Valley Residuen für alle Fokusebenen | -85,5 | 0,13524 | 0,0644 | 0,08484 |
| | -42,75 | 0,11442 | 0,04932 | 0,05203 |
| | 0 | 0,09006 | 0,03805 | 0,03563 |
| | 42,75 | 0,07737 | 0,04418 | 0,0921 |
| | 85,5 | 0,06364 | 0,06757 | 0,15666 |
| | Mittelwert | 0,096146 | 0,052704 | 0,084252 |
| RMS-Residuen für alle Fokusebenen | -85,5 | 0,03039 | 0,0201 | 0,01379 |
| | -42,75 | 0,02542 | 0,01774 | 0,01162 |
| | 0 | 0,02118 | 0,01561 | 0,01062 |
| | 42,75 | 0,01825 | 0,01477 | 0,01269 |
| | 85,5 | 0,01677 | 0,01716 | 0,02066 |
| | Mittelwert | 0,022402 | 0,017076 | 0,013876 |

Fig.7